# FASCICULE DE BREVET EUROPEEN

(11) **EP 3 728 041 B1**
(45) Date de publication et mention de la délivrance du brevet: **27.11.2024**
(21) Numéro de dépôt: 18833970.9
(22) Date de dépôt: 18.12.2018
(51) Int. Cl.: B64D 29/06, B64D 29/08, B64D 27/40

(54) **ENSEMBLE DE CAPOT OUVRANT ET MÉCANISME DE DEPLOIEMENT**
ÖFFNENDE TRIEBWERKSVERKLEIDUNGSANORDNUNG UND EINSATZMECHANISMUS
OPENING COWL ASSEMBLY AND DEPLOYMENT MECHANISM

(30) Priorité: 18.12.2017 FR 1762327
(43) Date de publication de la demande: 28.10.2020
(73) Titulaire: SAFRAN AIRCRAFT ENGINES, 75015 Paris (FR)
(72) Inventeur: HELLEGOUARCH, Antoine Elie, 77550 MOISSY-CRAMAYEL (FR); GARNAUD, Quentin Matthias Emmanuel, 77550 MOISSY-CRAMAYEL (FR); TESNIERE, Marc Patrick, 77550 MOISSY-CRAMAYEL (FR)
(74) Mandataire: Cabinet Beau de Loménie
(86) Numéro de dépôt international: PCT/FR2018/053368
(87) Numéro de publication internationale: WO 2019/122684

(56) Documents cités:
- FR-A1- 2 912 378
- FR-A1- 2 920 177
- FR-A1- 2 926 790
- US-A- 2 178 998

## Description

### Arrière-plan de l'invention

La présente invention concerne le domaine des carénages d'ensembles propulsifs d'aéronef, et plus particulièrement un ensemble comprenant un capot ouvrant de carénage du générateur de gaz (en anglais : « engine core ») d'un turboréacteur à double flux (en anglais : « turbofan »), et un mécanisme de déploiement pour déplacer le capot ouvrant entre une position ouverte et une position fermée.

Dans l'état de la technique, des mécanismes de déploiement ont été proposés, par exemple dans la publication de demande de brevet français FR 2 926 790 A1, montés directement sur un carter du générateur de gaz. Ceci soumet toutefois ce carter à des efforts mécaniques supplémentaires que l'on pourrait préférer éviter.

Pour cela, dans d'autres ensembles, comme par exemple ceux divulgués dans la publication de demande internationale de brevet WO 2014/0911162A1, et dans les publications de demandes de brevets français FR 2 622 930 A1, FR 2 920 177 A1 et FR 2 912 378 A1, il a été proposé de relier le mécanisme de déploiement à un pylône soutenant l'ensemble propulsif. Toutefois, ceci pose des restrictions supplémentaires à la géométrie, l'encombrement et surtout la cinématique du mécanisme de déploiement pour éviter une interférence mécanique avec le pylône ou avec un autre capot ouvrant.

### Objet et résumé de l'invention

La présente invention vise à remédier à ces inconvénients en proposant un ensemble comprenant un capot ouvrant de carénage du générateur de gaz d'un turboréacteur à double flux et un mécanisme de déploiement pour déplacer le capot ouvrant entre une position ouverte et une position fermée, dans lequel le mécanisme de déploiement peut être simplifié sans risque d'interférence mécanique avec d'autres éléments de la nacelle du turboréacteur à double flux.

Suivant cette invention, pour atteindre ce but, cet ensemble comprend aussi une poutre longitudinale configurée pour être montée latéralement sur un générateur de gaz de turboréacteur à double flux, orientée parallèlement à un axe longitudinal du turboréacteur à double flux, et le mécanisme de déploiement est monté sur cette poutre longitudinale.

Grâce à ces dispositions, le mécanisme de déploiement peut être monté de manière stable sur un côté du générateur de gaz, bénéficiant ainsi de plus d'espace qu'à proximité d'un pylône de support du turboréacteur à double flux.

Suivant cette invention, le mécanisme de déploiement comprend un premier bras pivotant s'étendant entre une première extrémité, reliée à la poutre longitudinale par une première charnière, et une deuxième extrémité, reliée au capot ouvrant par une deuxième charnière. Le mécanisme de déploiement peut ainsi permettre l'ouverture du capot ouvrant par pivotement du premier bras pivotant pour offrir un bon accès au générateur de gaz afin, par exemple d'y effectuer des travaux d'inspection, maintenance et/ou réparation. Pour assurer alors le maintien du capot ouvrant en position ouverte et/ou en position fermée, le mécanisme de déploiement comprend en outre une bielle de maintien s'étendant entre une première extrémité, reliée par une première articulation au bras pivotant entre les première et deuxième extrémités du bras pivotant, et une deuxième extrémité, reliée par une deuxième articulation au capot ouvrant. La bielle de maintien peut ainsi bloquer le pivotement du bras pivotant par rapport au capot ouvrant. Pour permettre ce coulissement, la bielle de maintien peut être télescopique et/ou la première articulation et/ou la deuxième articulation de la bielle de maintien être coulissante. Le mécanisme de déploiement peut alors comprendre au moins un verrou pour bloquer le coulissement de l'articulation coulissante et/ou le télescopage de la bielle de maintien et ainsi bloquer le pivotement relatif du bras pivotant par rapport au capot ouvrant.

Le mécanisme de déploiement peut aussi comprendre un deuxième bras pivotant parallèle au premier bras pivotant et s'étendant aussi entre une première extrémité reliée à la poutre longitudinale par une première charnière et une deuxième extrémité reliée au capot ouvrant par une deuxième charnière, de manière à former un parallélogramme déformable avec le premier bras pivotant, la poutre longitudinale et le capot ouvrant, et maintenir ainsi l'orientation du capot ouvrant par rapport à la poutre longitudinale pendant l'ouverture et la fermeture du capot ouvrant. En outre, avec un tel parallélogramme déformable, la bielle de maintien peut non seulement bloquer le pivotement du capot ouvrant par rapport au premier bras pivotant, mais aussi, à travers cela, tout le mouvement d'ouverture ou fermeture du capot ouvrant.

Le mécanisme de déploiement peut aussi comprendre une béquille de capot apte à être fixée de manière libérable entre la poutre longitudinale et le capot ouvrant en position ouverte, afin de maintenir leur écart. En outre, la première charnière peut être montée coulissante sur la poutre longitudinale, pour ainsi combiner un débattement latéral et un coulissement longitudinal dans l'ouverture et fermeture du capot ouvrant, et ainsi offrir un meilleur accès au générateur de gaz.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique en perspective d'un aéronef,
- la figure 2 est une vue schématique en coupe longitudinale d'un turboréacteur à double flux de l'aéronef de la figure 1,
- la figure 3 est une vue latérale d'un ensemble structurel reliant le turboréacteur à double flux de la figure 2 à une structure réceptrice de l'aéronef de la figure 1,
- la figure 4 est une vue frontale de l'ensemble structurel de la figure 3,
- la figure 5 est une vue en perspective trois-quarts arrière de l'ensemble structurel de la figure 3,
- la figure 6 est une vue de détail d'une interface de montage avant de l'ensemble structurel de la figure 3,
- la figure 7 est une vue de détail d'une interface de montage arrière de l'ensemble de la figure 3,
- la figure 8 est une vue de détail d'un point de suspension central d'une variante de l'ensemble structurel de la figure 3,
- la figure 9 est une vue en perspective trois-quarts arrière d'une variante de l'ensemble de la figure 3,
- la figure 10 est une vue schématique de dessus d'un mécanisme de déploiement interposé entre un capot ouvrant du générateur de gaz du turboréacteur à double flux de la figure 2 et une poutre longitudinale de l'ensemble de la figure 3, suivant un premier mode de réalisation, avec le capot ouvrant en position fermée,
- la figure 11 est une vue schématique de dessus du mécanisme de déploiement de la figure 10, avec le capot ouvrant en position ouverte,
- la figure 12 est une vue schématique arrière du mécanisme de déploiement de la figure 10, avec le capot ouvrant en position ouverte,
- la figure 13 est une vue schématique arrière d'une variante du mécanisme de déploiement de la figure 10, avec le capot ouvrant en position ouverte,
- la figure 14 est une vue schématique de dessus d'une autre variante du mécanisme de déploiement de la figure 10, avec le capot ouvrant en position ouverte,
- la figure 15 est une vue de détail d'un joint d'étanchéité amont du capot ouvrant de la figure 10, en position fermée,
- la figure 16 est une vue schématique de dessus d'encore une autre variante du mécanisme de déploiement de la figure 10, avec le capot ouvrant en position ouverte,
- la figure 17 est une vue schématique de dessus d'un mécanisme de déploiement suivant un exemple comparatif, avec le capot ouvrant en position fermée,
- la figure 18 est une vue schématique de dessus du mécanisme de déploiement de la figure 17, avec le capot ouvrant en position ouverte,
- la figure 19 est une coupe schématique transversale du mécanisme de déploiement de la figure 17,
- la figure 20 est une vue schématique de dessus d'un mécanisme de déploiement suivant un deuxième mode de réalisation, avec le capot ouvrant en position fermée,
- la figure 21 est une vue schématique de dessus du mécanisme de déploiement de la figure 20, avec le capot ouvrant en position ouverte, et
- la figure 22 est une vue schématique de dessus du mécanisme de déploiement de la figure 20, avec le capot ouvrant en position intermédiaire entre les positions ouverte et fermée.

### Description détaillée de l'invention

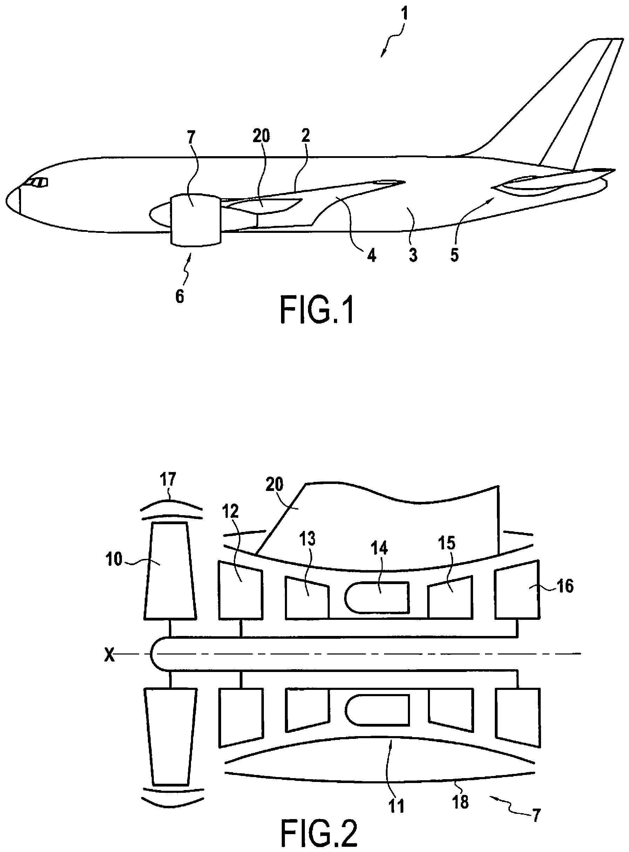

La figure 1 illustre un aéronef 1 comprenant un fuselage 3, une voilure 4 et un empennage 5, et deux ensembles propulsifs 6 suspendus, sous la voilure 4, à des structures réceptrices 2 correspondantes. Chaque structure réceptrice 2 peut être solidaire d'une aile respective parmi les deux ailes de la voilure 4. Bien que sur la figure 1, qui est une vue latérale de l'aéronef 1, une seule aile de cette voilure 4 soit visible avec sa structure réceptrice 2 et son ensemble propulsif 4 correspondant, l'aéronef 1 peut être sensiblement symétrique par rapport à un plan longitudinal et vertical, de telle manière que l'autre aile, avec la structure réceptrice et l'ensemble propulsif 6 respectifs, soit située du côté caché de l'aéronef 1, et ne soit donc pas visible sur cette figure. De manière connue en soi, chaque structure réceptrice 2 peut comprendre un pylône fixé à l'aile, par exemple par des interfaces fixées sur au moins un longeron de l'aile. Toutefois, alternativement ou en complément à un tel pylône, la structure réceptrice peut consister encore en un caisson structural de l'aile.

Un autre ensemble propulsif 6 identique ou similaire est également suspendu à une deuxième aile de l'autre côté de l'aéronef, non visible sur la figure. Chacun de ces deux ensembles propulsifs 6 peut comprendre un turboréacteur à double flux 7. Comme illustré schématiquement sur la figure 2, ce turboréacteur à double flux 7 peut comprendre une soufflante 10 et un générateur de gaz 11 formé par un compresseur basse pression 12, un compresseur haute pression 13, une chambre de combustion 14, une turbine haute pression 15 couplée au compresseur haute pression 13 pour son actionnement, et une turbine basse pression 16 couplée à la soufflante 10 et au compresseur basse pression 12 pour leur actionnement, alignés en direction longitudinale suivant l'axe longitudinal X qui peut être aussi l'axe de poussée du turboréacteur à double flux 7. Dans chacun des deux ensembles propulsifs 6, la soufflante 10 et le générateur de gaz 11 reçoivent des carénages 17, 18 respectifs.

Dans l'aéronef 1 illustré, les turboréacteurs à double flux 7 peuvent avoir un taux de dilution élevé, supérieur par exemple à 5:1, 10:1, voire même 15:1. Le diamètre de la soufflante 10 est donc particulièrement grand, de telle manière que, pour maintenir une garde au sol suffisante, puisque l'aéronef 1 illustré est à voilure basse, la soufflante 10 est décalée vers le haut et vers l'avant par rapport à une disposition conventionnelle. Pour parvenir à ce décalage, la soufflante 10 n'est pas suspendue à la structure réceptrice 2 solidaire de la voilure 4, mais est maintenue uniquement par ses liaisons structurales au générateur de gaz 11. Ainsi, comme illustré sur la figure 1, l'ensemble structurel 20 reliant chaque turboréacteur à double flux 7 à la voilure n'est pas attaché directement à la soufflante 10, mais uniquement au générateur de gaz 11, avec la soufflante 10 suspendue ainsi en porte-à-faux par rapport à cet ensemble 20.

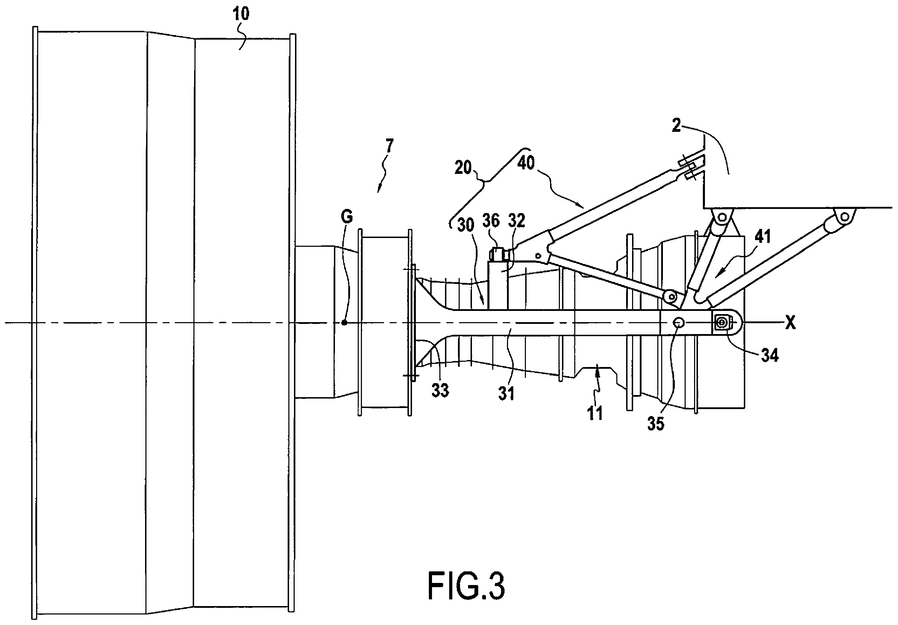

Un exemple de réalisation de l'ensemble 20 est illustré sur les figures 3 à 5. Ainsi, comme on peut voir sur ces figures, cet ensemble structurel 20 peut comprendre une structure porteuse 30 configurée pour être rapportée sur le générateur de gaz 11 et une structure de suspension 40 pour relier la structure porteuse 30 à la structure réceptrice de l'aéronef 1. Plus spécifiquement, la structure porteuse 30, qui peut notamment être formée en une seule pièce monobloc, peut comprendre deux poutres longitudinales 31 et une liaison transversale 32 les reliant de façon rigide. Dans le mode de réalisation illustré, cette liaison transversale 32 est en forme d'arceau, mais d'autres formes peuvent être envisagées pour cette liaison transversale 32, comme par exemple un anneau fermé sur 360°, monocorps avec les deux poutres longitudinales ou rapporté à celles-ci, ce qui pourrait renforcer encore la rigidité de la structure porteuse 30 dans le plan transversal. Comme dans le mode de réalisation illustré, chacune des deux poutres longitudinales 31 peut comporter au moins une interface de montage avant 33 et une interface de montage arrière 34 pour monter la structure sur le générateur de gaz 11, et un point de suspension latéral 35 pour connexion avec la structure de suspension 40. Ces points de suspension latéraux 35 sur les poutres longitudinales 31 peuvent être complémentés, comme illustré, par un point de suspension central 36 pour connexion avec la structure de suspension 40, situé sur la liaison transversale 32.

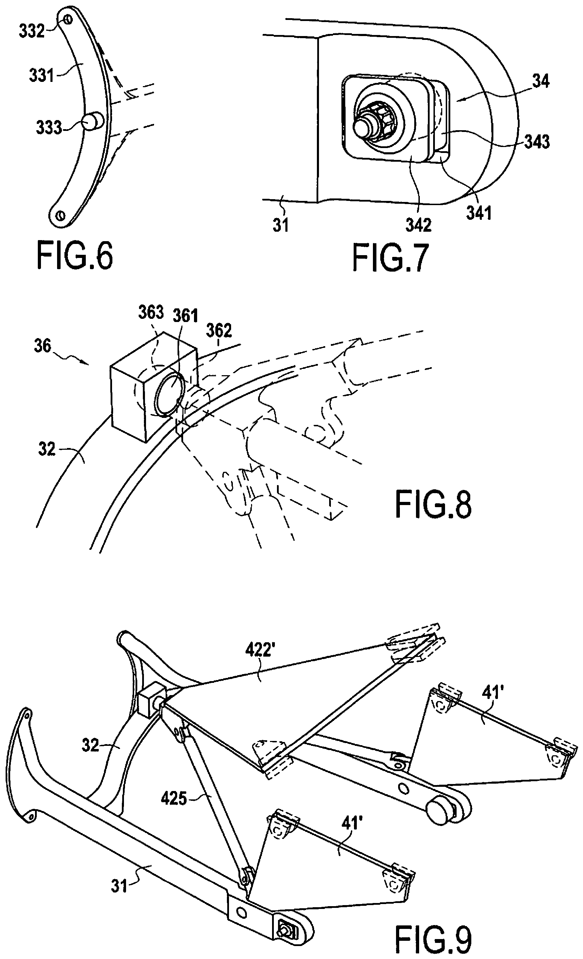

Comme illustré, chaque interface de montage avant 33 peut être configurée pour être fixée à un carter proche de l'extrémité avant du générateur de gaz 11, par exemple un flasque de carter inter-compresseurs situé entre le compresseur basse pression 12 et le compresseur haute pression 13 et transmettre des efforts tant en direction longitudinale comme dans un plan transversal perpendiculaire à l'axe longitudinal X. Pour cela, comme illustré en détail sur la figure 6, chaque interface de montage avant 33 peut comprendre une plaque 331 avec des orifices traversants 332 pour recevoir des boulons afin de transmettre les efforts longitudinaux en traction, et au moins un ergot 333 pour transmettre des efforts transversaux en cisaillement. Ces efforts transversaux peuvent être tant latéraux, c'est-à-dire parallèles à l'axe latéral Y, comme verticaux, c'est-à-dire parallèles à l'axe vertical Z.

D'autre part, chaque interface de montage arrière 34 peut être configurée pour être reliée à un carter plus proche de l'extrémité arrière du générateur de gaz 11, par exemple un carter de turbine, en permettant un débattement relatif longitudinal et transversal du générateur de gaz 11 par rapport à cette interface de montage arrière 34, de manière à accommoder la dilatation thermique du générateur de gaz 11 en fonctionnement. Ainsi, comme illustré sur la figure 7, chaque interface de montage arrière 34 peut comprendre une coulisse 341 pour recevoir un coulisseau 342 monté sur un plot 343 solidaire du générateur de gaz 11, par exemple d'un carter de turbine du générateur de gaz 11, en permettant un débattement du coulisseau 342 en direction longitudinale ainsi qu'en direction latérale. De cette manière, les interfaces de montage arrière 34 ne transmettront normalement que des efforts verticaux pour compenser le décalage longitudinal entre le centre de gravité G du turboréacteur à double flux 7 et les interfaces de montage avant 33.

Ainsi, lorsque la structure porteuse 30 est montée sur le générateur de gaz 11, ce dernier peut être fixé entre les deux poutres longitudinales 31, orientées parallèlement à l'axe longitudinal X du turboréacteur à double flux 7, de manière à ce qu'elles reprennent les moments en flexion verticale, et notamment ceux générés par le porte-à-faux de la soufflante 10, déchargeant ainsi les carters du générateur de gaz 11 de tels efforts.

Les points de suspension latéraux 35 peuvent être situés sur les extrémités arrière des poutres longitudinales 31, à proximité des interfaces de montage arrière 34, et être configurés pour transmettre des efforts longitudinaux et verticaux. Pour cela, chaque point de suspension latéral 35 peut par exemple comprendre un axe 351 destiné à être reçu, orienté en direction latérale, dans un orifice correspondant dans la structure de suspension 40. Le point de suspension central 36 peut être situé, comme illustré, au centre de la liaison transversale 32 chevauchant le générateur de gaz 11 lorsque la structure est montée sur celui-ci. Le point de suspension central peut alors directement surplomber l'axe longitudinal X du turboréacteur à double flux 7, et être configuré pour transmettre des efforts verticaux et latéraux dans le plan transversal. Pour cela, le point de suspension central 36 peut comprendre, comme illustré, un orifice 361 configuré pour recevoir un groin de suspension 362 orienté en direction longitudinale. Dans une variante illustrée en détail sur la figure 8, le point de suspension central 36 peut aussi comprendre une rotule 363 comportant une noix de rotule dans laquelle soit formé l'orifice 361, afin de permettre un débattement angulaire du groin de suspension 362 dans le point de suspension central 36, et éviter ainsi la transmission de moments à travers le point de suspension central 36.

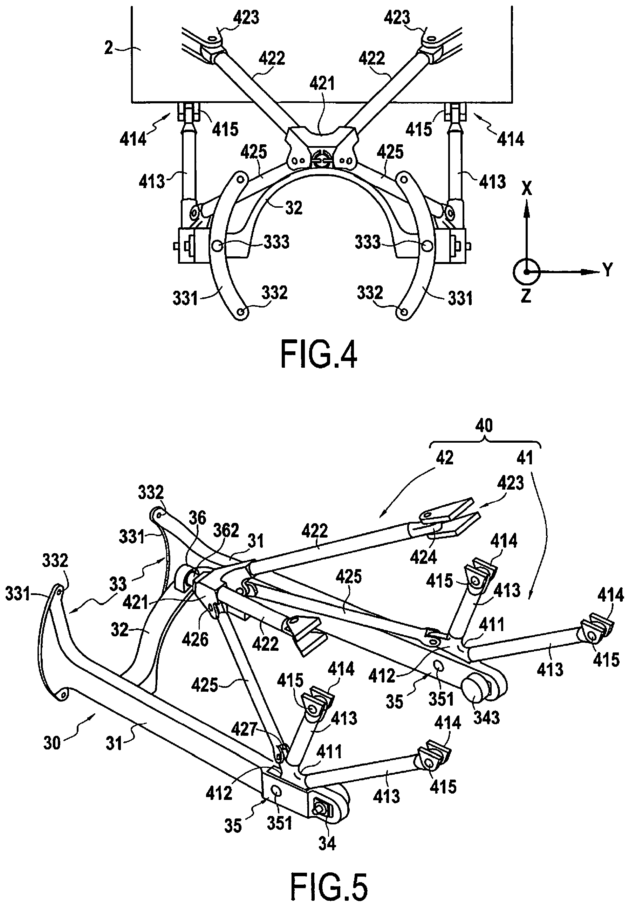

Comme illustré sur les figures 3 à 5, la structure de suspension 40 peut comprendre deux triangles de suspension 41, chacun configuré pour être connecté par une pointe inférieure 411 (figure 5) à un des points de suspension latéraux 35 de la structure 30. Quand les points de suspension latéraux 35 comprennent, comme dans l'exemple illustré, des axes 351, les chapes 412 destinés à les recevoir peuvent être formées dans ces pointes inférieures 411 des triangles de suspension 41. Chaque triangle de suspension 41 peut être orienté de manière à transmettre vers la structure réceptrice 2 les efforts verticaux et longitudinaux qu'il reçoit à travers le point de suspension latéral 35 correspondant. Afin de limiter leur masse, chaque triangle de suspension 41 peut être formé, comme illustré, par deux bielles 413 reliées par la pointe inférieure 411, quoiqu'il soit aussi envisageable d'utiliser une plaque triangulaire 41' pour chaque triangle de suspension, comme dans la variante illustrée sur la figure 9. Chaque bielle 413 de chaque triangle de suspension 41 peut être configurée, comme illustré, pour être connectée, par son extrémité opposée à la pointe inférieure 411, à un point d'attache 414 sur la structure réceptrice 2, à travers une articulation 415 permettant au moins un débattement angulaire dans le plan du triangle de suspension 41, de manière à éviter la transmission de moments de flexion entre la structure réceptrice 2 et chaque bielle 413. Ces articulations 415 peuvent comprendre aussi des rotules pour permettre des débattements angulaires dans d'autres plans.

La suspension 40 peut par ailleurs comprendre aussi, comme illustré, une pyramide de suspension 42 configurée pour relier le point de suspension central 36 de la structure 30 à la structure réceptrice 2. Pour cela, cette pyramide de suspension 42 peut comprendre un sommet 421, dans lequel soit formé le groin de suspension 362, et quatre bielles se rejoignant au sommet 421. Plus spécifiquement, parmi ces quatre bielles, deux bielles supérieures 422 peuvent être fixées rigidement au sommet 421, s'étendre vers des points d'attache 423 correspondants sur la structure réceptrice 2, et être configurées pour être reliées à ces points d'attache 423 à travers des articulations 424 pour empêcher la transmission de moments de flexion, dans ce plan incliné, entre chacun des points d'attache 423 et la bielle supérieure 422 correspondante. Deux bielles inférieures 425, reliées chacune par des articulations 426, 427 correspondantes au sommet 421 de la pyramide de suspension 42 et à la pointe inférieure 411 d'un triangle de suspension 41 respectif, peuvent compléter la pyramide de suspension 42 de manière à maintenir l'écart entre le sommet 421 de la pyramide 42 et les pointes inférieures 411 des triangles de suspension 41. La géométrie de la structure de suspension 40 peut ainsi être maintenue même quand la structure porteuse 30 en est détachée.

Comme chacun des triangles de suspension 41, les deux bielles supérieures 422 pourraient aussi être remplacées par une plaque triangulaire 422', orientée dans le plan incliné et reliée de manière analogue au sommet 421 de la pyramide de suspension 42 et aux points d'attache 423 sur la structure réceptrice 2, comme dans la variante illustrée sur la figure 9, dans laquelle les éléments équivalents à ceux de la figure 5 reçoivent les mêmes chiffres de référence. L'impact aérodynamique d'une telle plaque 422' sur le flux d'air dans la veine secondaire peut être maîtrisé, par exemple en ajourant la plaque 422', ce qui permet aussi d'en réduire la masse. Même si sur la variante illustrée les plaques triangulaires 41' et 422' remplacent chacun des triangles de suspension 41 ainsi que les bielles supérieures 422, il est aussi envisageable de ne remplacer que les bielles supérieures 422 ou l'un et/ou l'autre des deux triangles de suspension 41 dans un structure de suspension mixte combinant bielles et une ou deux plaques triangulaires. Par ailleurs, la plaque 422', voire l'une ou l'autre des plaques 41', pourra être utilisée comme support d'un échangeur de chaleur surfacique, par exemple un échangeur air/air ou air/huile.

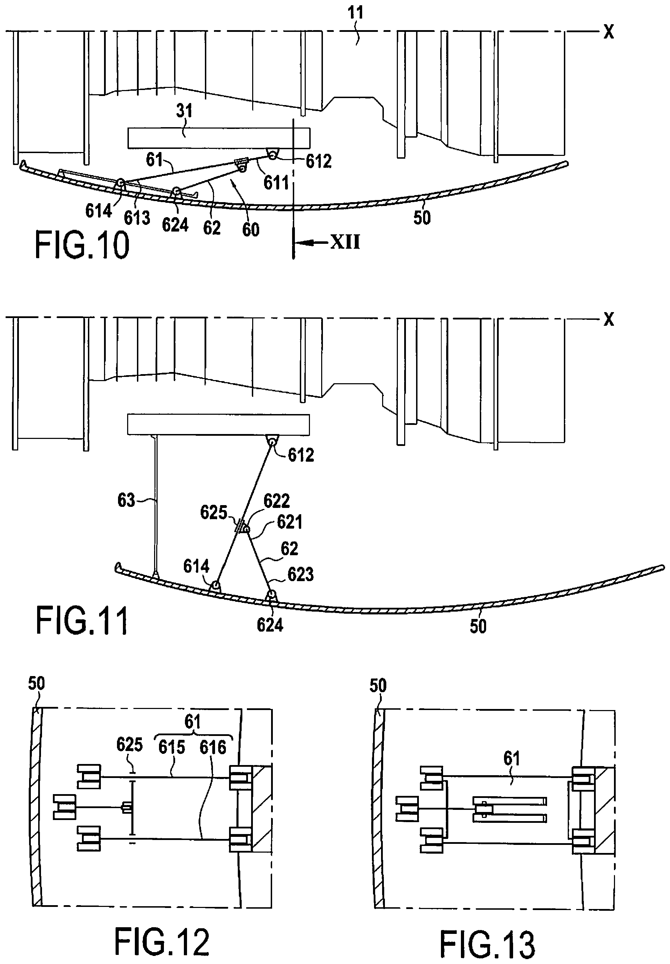

Afin de permettre des travaux d'inspection, maintenance, voire réparation du générateur de gaz 11, son carénage 18 peut comprendre des capots ouvrants 50. Chaque capot ouvrant 50 peut être situé latéralement par rapport au générateur de gaz 11 et être relié à la poutre longitudinale 31 correspondante de la structure 30 par un mécanisme de déploiement 60. Suivant un premier mode de réalisation, illustré sur les figures 10 à 12, ce mécanisme de déploiement 60 peut comprendre un bras pivotant 61, s'étendant entre une première extrémité 611 reliée à la poutre longitudinale 31 par une première charnière 612 dont l'axe de pivotement peut notamment être vertical, et une deuxième extrémité 613 reliée au capot ouvrant 50 par une deuxième charnière 614, dont l'axe de pivotement peut notamment être parallèle à celui de la première charnière 612. Quand les axes de pivotement des premières et deuxièmes charnières 612, 614 sont parallèles, ce bras pivotant 61 peut être formé, comme illustré, par deux bielles parallèles 615, 616, décalées l'une par rapport à l'autre suivant ces axes de pivotement, comme illustré sur la figure 12. Toutefois, il est également envisageable que le bras pivotant 61 soit formé d'une pièce, avec une certaine largeur suivant les axes de pivotement, comme dans la variante illustrée sur la figure 13.

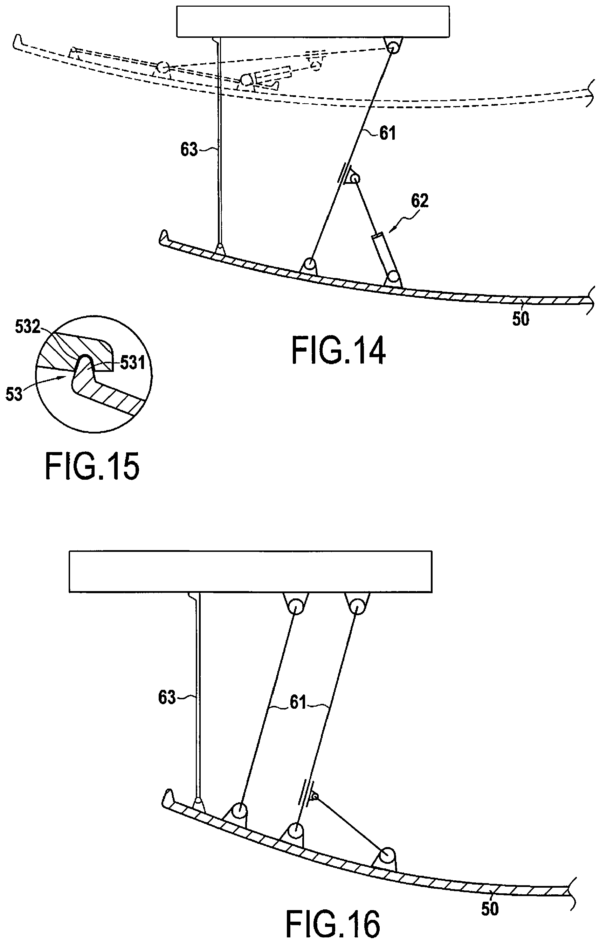

Afin d'assurer le maintien du capot ouvrant 50 en position ouverte et/ou en position fermée, le mécanisme de déploiement 60 comporte en outre une bielle de maintien 62 s'étendant entre une première extrémité 621, reliée par une première articulation 622 au bras pivotant 61 entre ses deux extrémités 611, 613, et une deuxième extrémité 623, reliée par une deuxième articulation 624 au capot ouvrant 50. Pour permettre le déplacement du capot ouvrant 50 entre ses positions ouverte et fermée, la première articulation 622 et/ou la deuxième articulation 624 de la bielle de maintien 62 peuvent être montées sur des glissières 625, comme illustré sur les figures 10 à 12, et/ou la bielle de maintien 62 peut être télescopique, comme dans la variante illustrée sur la figure 14. Le mécanisme de déploiement 60 peut alors comprendre aussi un verrou (non illustré) pour verrouiller la bielle de maintien 62 lorsque le capot ouvrant 50 est en position ouverte et/ou en position fermée.

Par ailleurs, le mécanisme de déploiement 60 peut aussi comprendre, en complément à la bielle de maintien 62, une béquille de capot 63 apte à être fixée de manière libérable entre la poutre longitudinale 31 et le capot ouvrant 50 en position ouverte pour maintenir cette position ouverte, et/ou au moins un verrou (non illustré) pour verrouiller le capot ouvrant 50 en position fermée en le retenant par exemple par son bord supérieur et/ou inférieur, comme illustré sur les figures 12 et 14.

Pour assurer l'étanchéité du capot ouvrant 50 en position fermée, et contenir le feu, il peut être pourvu d'au moins un joint d'étanchéité 53 sur son périmètre extérieur, et notamment sur son bord amont. Comme illustré sur la figure 15, ce joint d'étanchéité 53 peut comprendre une nervure 531 en saillie radiale vers l'intérieur sur le bord du capot ouvrant 50, et une rainure 532 solidaire du générateur de gaz 11 et ouverte radialement vers l'extérieur pour recevoir la nervure 531 quand le capot ouvrant 50 arrive en position fermée. Cet arrangement peut toutefois aussi être inversé, de manière à situer la nervure sur le générateur de gaz 11 et la rainure sur le capot ouvrant 50. Comme illustré, la rainure 532 peut notamment présenter une section en V.

Dans une variante illustrée sur la figure 16, le mécanisme de déploiement 60 peut comprendre au moins deux bras pivotants 61 parallèles et décalés l'un par rapport à l'autre en direction longitudinale, connectés de manière analogue à la poutre longitudinale 31 et au capot ouvrant 50, pour former ainsi avec eux un parallélogramme déformable permettant de maintenir l'orientation du capot ouvrant 50 pendant son ouverture et fermeture.

Lors de l'ouverture du capot ouvrant 50 à partir de la position fermée illustrée sur la figure 10 avec le mécanisme de déploiement 60 suivant ce premier mode de réalisation, on peut d'abord procéder à faire pivoter au moins un bras pivotant 61, après le déverrouillage du verrou 64 et/ou de la bielle de maintien 62, pour écarter latéralement le capot ouvrant 50 du générateur de gaz 11 tout en le déplaçant vers l'aval, et atteindre ainsi la position ouverte illustrée sur la figure 11, afin de rendre ainsi accessible le générateur de gaz 11, par exemple pour des travaux d'inspection, entretien et/ou réparation. On peut finalement procéder à verrouiller le mécanisme de déploiement 60 dans cette position ouverte avec le verrou de la bielle de maintien 62 et/ou fixer la béquille de capot 63 entre la poutre longitudinale 31 et le capot ouvrant 50 afin d'éviter une fermeture intempestive. Ces étapes peuvent ensuite être inversées pour refermer le capot ouvrant 50, en revenant de la position ouverte illustrée sur la figure 11 vers la position fermée illustrée sur la figure 10.

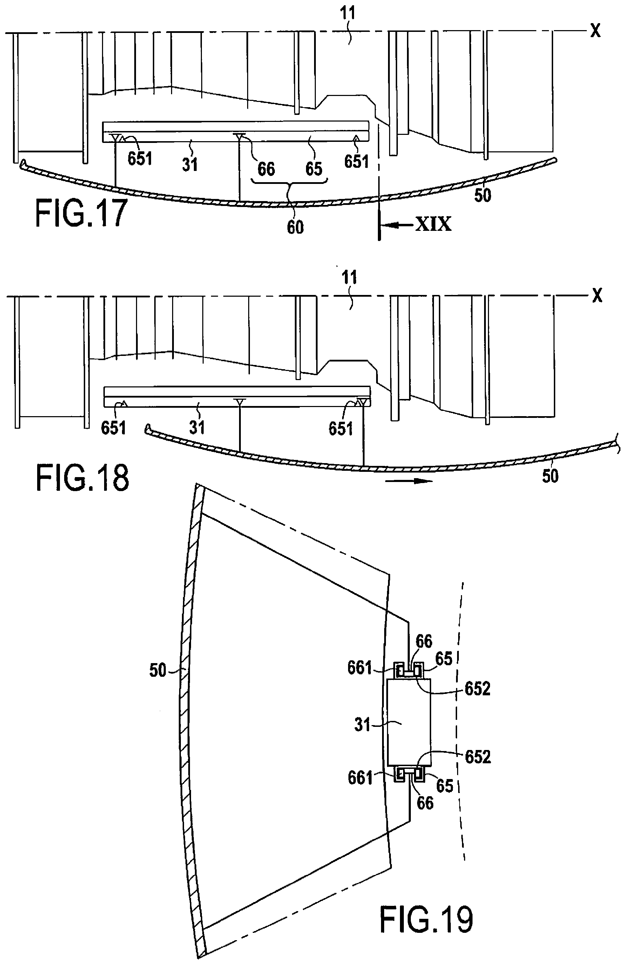

Suivant un exemple comparatif, illustré sur les figures 17 à 19, le mécanisme de déploiement 60 peut comprendre, au lieu d'un ou plusieurs bras pivotants, une ou plusieurs coulisses 65 solidaires de la poutre longitudinale 31 et un ou plusieurs coulisseaux 66 solidaires du capot ouvrant 50 pour permettre une ouverture et fermeture du capot ouvrant 50 par coulissement de l'au moins un coulisseau 66 dans l'au moins une coulisse 65. En particulier, comme illustré sur les figures 17 et 18, la coulisse 65 peut être orientée suivant la direction longitudinale, pour ainsi permettre un coulissement longitudinal du capot ouvrant 50 entre sa position ouverte et sa position fermée. Comme illustré sur la figure 19, le mécanisme de déploiement 60 peut notamment comprendre une première coulisse 65 située sur une face supérieure de la poutre longitudinale 31 et une deuxième coulisse 65 située sur une face inférieure de la poutre longitudinale 31, recevant chacune au moins deux coulisseaux 66 reliés au capot ouvrant 50 et mutuellement décalés en direction longitudinale.

Afin de permettre le maintien du capot ouvrant 50 en position ouverte et/ou fermée, la coulisse 65 peut comporter au moins un verrou 651 en fin de course. Par ailleurs, pour faciliter leur coulissement, les coulisseaux 66 peuvent être munis de galets 661 aptes à rouler sur des surfaces de roulement 652 dans la coulisse 65, comme illustré sur la figure 19. Les autres éléments illustrés étant équivalents à ceux du premier mode de réalisation, ils reçoivent les mêmes chiffres de référence sur les figures 17 à 19 que sur les figures précédentes.

Lors de l'ouverture du capot ouvrant 50 à partir de la position fermée illustrée sur la figure 17 avec le mécanisme de déploiement 60 suivant ce deuxième mode de réalisation, et après avoir déverrouillé au moins un coulisseau 66, on peut procéder à faire coulisser le capot ouvrant 50 longitudinalement en direction aval vers la position ouverte illustrée sur la figure 18, afin de rendre ainsi accessible le générateur de gaz 11, par exemple pour des travaux d'inspection, entretien et/ou réparation. On peut finalement procéder à verrouiller le mécanisme de déploiement 60 dans cette position ouverte, afin d'éviter une fermeture intempestive. Ces étapes peuvent ensuite être inversées pour refermer le capot ouvrant 50, en revenant de la position ouverte illustrée sur la figure 18 vers la position fermée illustrée sur la figure 17.

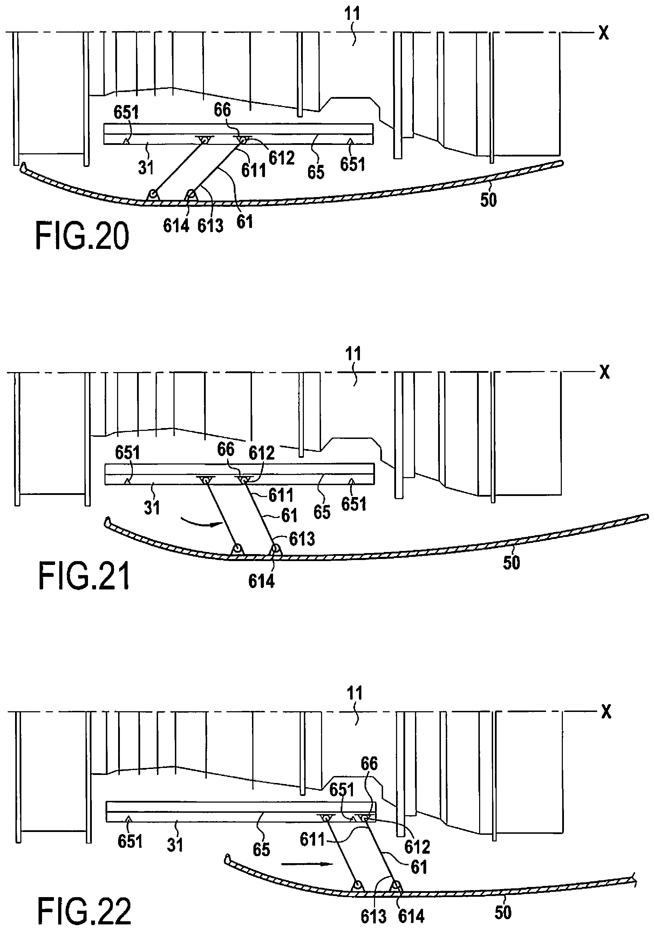

Afin d'offrir un encore meilleur accès au générateur de gaz, il est également possible de combiner bras pivotant et coulissement comme dans un mécanisme de déploiement 60 suivant un deuxième mode de réalisation illustré sur les figures 20 à 22. Comme illustré, chaque coulisseau 66 peut alors être relié au capot ouvrant 50 par un bras pivotant 61 s'étendant entre une première extrémité 611 reliée à au coulisseau 66 par une première charnière 612 dont l'axe de pivotement peut notamment être vertical, et une deuxième extrémité 613 reliée au capot ouvrant 50 par une deuxième charnière 614, dont l'axe de pivotement peut notamment être parallèle à celui de la première charnière 612. Pour permettre le maintien du capot ouvrant 50 en position ouverte et/ou fermée, la coulisse 65 peut comporter au moins un verrou 651 en fin de course, comme dans le deuxième mode de réalisation susmentionné, et au moins une des charnières 612, 614 comporter un verrou (non illustré) pour verrouiller de manière libérable le débattement angulaire de l'au moins un bras pivotant 61. Les autres éléments illustrés étant équivalents à ceux dues deux premier mode de réalisation et de l'exemple comparatif, ils reçoivent les mêmes chiffres de référence sur les figures 20 à 22 que sur les figures précédentes.

Lors de l'ouverture du capot ouvrant 50 à partir de la position fermée illustrée sur la figure 20 avec le mécanisme de déploiement 60 suivant ce deuxième mode de réalisation, on peut d'abord procéder à faire pivoter au moins un bras pivotant 61, après son déverrouillage, pour écarter latéralement le capot ouvrant 50 du générateur de gaz 11, pour atteindre ainsi la position intermédiaire illustrée sur la figure 22. A partir de cette position intermédiaire et après avoir déverrouillé au moins un coulisseau 66, on peut procéder à faire coulisser le capot ouvrant 50 longitudinalement en direction aval vers la position ouverte illustrée sur la figure 22, afin de rendre ainsi accessible le générateur de gaz 11, par exemple pour des travaux d'inspection, entretien et/ou réparation. On peut finalement procéder à verrouiller le mécanisme de déploiement 60 dans cette position ouverte, afin d'éviter une fermeture intempestive. Ces étapes peuvent ensuite être inversées pour refermer le capot ouvrant 50, en revenant de la position ouverte illustrée sur la figure 22 vers la position fermée illustrée sur la figure 20 en passant à nouveau par la position intermédiaire illustrée sur la figure 21.

Quoique la présente invention ait été décrite en se référant à des exemples et modes de réalisation spécifiques, ainsi qu'à des variantes particulières, il est évident que des différentes modifications et changements peuvent être effectués sur ces exemples et leurs variantes sans sortir de la portée générale de l'invention telle que définie par les revendications. Par exemple, bien que l'on n'ait décrit, pour chaque mode de réalisation, qu'un seul capot ouvrant avec un mécanisme de déploiement sur un latéral du générateur de gaz, il est bien sûr envisageable d'avoir un tel capot ouvrant, et un mécanisme de déploiement correspondant, de chaque côté du générateur de gaz.

Par conséquent, la description et les dessins doivent être considérés dans un sens illustratif plutôt que restrictif.

## Revendications

1. Ensemble comprenant :
une poutre longitudinale (31) configurée pour être montée latéralement sur un générateur de gaz (11) de turboréacteur à double flux (7), orientée parallèlement à un axe longitudinal (X) du turboréacteur à double flux (7),
un capot ouvrant (50) pour carénage (18) du générateur de gaz (11), et
un mécanisme de déploiement (60) monté sur la poutre longitudinale (31) pour déplacer le capot ouvrant (50) entre une position ouverte et une position fermée, et comprenant un premier bras pivotant (61) s'étendant entre une première extrémité (611) reliée à la poutre longitudinale (31) par une première charnière (612) et une deuxième extrémité (613) reliée au capot ouvrant (50) par une deuxième charnière (614), et
**caractérisé en ce que** le mécanisme de déploiement (60) comprend en outre une bielle de maintien (62) s'étendant entre une première extrémité (621), reliée par une première articulation (622) au bras pivotant (61) entre les première et deuxième extrémités (611, 613) du bras pivotant (61), et une deuxième extrémité (623), reliée par une deuxième articulation (624) au capot ouvrant (50).

2. Ensemble suivant la revendication 1, dans lequel la première articulation (622) et/ou la deuxième articulation (624) de la bielle de maintien (62) est coulissante.

3. Ensemble suivant l'une quelconque des revendications 1 ou 2, dans lequel la bielle de maintien (62) est télescopique.

4. Ensemble suivant l'une quelconque des revendications 1 à 3, comprenant en outre un deuxième bras pivotant (61) parallèle au premier bras pivotant (61) et s'étendant aussi entre une première extrémité (611) reliée à la poutre longitudinale (31) par une première charnière (612) et une deuxième extrémité (613) reliée au capot ouvrant (50) par une deuxième charnière (614), de manière à former un parallélogramme déformable avec le premier bras pivotant (61), la poutre longitudinale (31) et le capot ouvrant (50).

5. Ensemble suivant l'une quelconque des revendications 1 à 4, comprenant en outre une béquille de capot (63) apte à être fixée de manière libérable entre la poutre longitudinale (31) et le capot ouvrant (50) en position ouverte.

6. Ensemble suivant l'une quelconque des revendications 1 à 5, dans lequel la première charnière (611) est montée coulissante sur la poutre longitudinale (31).

## Patentansprüche

1. Anordnung, umfassend:
einen Längsträger (31), der ausgelegt ist, um seitlich an einem Gasgenerator (11) eines Turbofan-Triebwerks (7) angebracht zu sein, parallel zu einer Längsachse (X) des Turbofan-Triebwerks (7) ausgerichtet,
eine öffnende Abdeckung (50) für die Verkleidung (18) des Gasgenerators (11), und
einen am Längsträger (31) angebrachten Entfaltungsmechanismus (60) zum Bewegen der öffnenden Abdeckung (50) zwischen einer geöffneten und einer geschlossenen Position, und umfassend einen ersten Schwenkarm (61), der sich zwischen einem ersten Ende (611), das über ein erstes Scharnier (612) mit dem Längsträger (31) verbunden ist, und einem zweiten Ende (613), das über ein zweites Scharnier (614) mit der öffnenden Abdeckung (50) verbunden ist, erstreckt, und
**dadurch gekennzeichnet, dass** der Entfaltungsmechanismus (60) ferner eine Haltestange (62) umfasst, die sich zwischen einem ersten Ende (621), das über ein erstes Gelenk (622) mit dem Schwenkarm (61) zwischen dem ersten und dem zweiten Ende (611, 613) des Schwenkarms (61) verbunden ist, und einem zweiten Ende (623), das über ein zweites Gelenk (624) mit der öffnende Abdeckung (50) verbunden ist, erstreckt.

2. Anordnung nach Anspruch 1, wobei das erste Gelenk (622) und/oder das zweite Gelenk (624) der Haltestange (62) verschiebbar ist.

3. Anordnung nach einem der Ansprüche 1 oder 2, wobei die Haltestange (62) teleskopisch ist.

4. Anordnung nach einem der Ansprüche 1 bis 3, umfassend ferner einen zweiten Schwenkarm (61) parallel zum ersten Schwenkarm (61) und der sich ebenfalls zwischen einem ersten Ende (611), das über ein erstes Scharnier (612) mit dem Längsträger (31) verbunden ist, und einem zweiten Ende (613), das über ein zweites Scharnier (614) mit der öffnenden Abdeckung (50) verbunden ist, erstreckt, so dass ein verformbares Parallelogramm mit dem ersten Schwenkarm (61), dem Längsträger (31) und der öffnenden Abdeckung (50) gebildet wird.

5. Anordnung nach einem der Ansprüche 1 bis 4, umfassend ferner eine Abdeckungsstütze (63), die imstande ist, in der geöffneten Position freigebbar zwischen dem Längsträger (31) und der öffnenden Abdeckung (50) befestigt zu werden.

6. Anordnung nach einem der Ansprüche 1 bis 5, wobei das erste Scharnier (611) verschiebbar an dem Längsträger (31) angebracht ist.

## Claims

1. An assembly comprising:
a longitudinal beam (31) configured to be mounted laterally on an engine core (11) of a turbofan (7), oriented parallel to a longitudinal axis (X) of the turbofan (7),
an opening cowl (50) for a fairing (18) of the engine core (11), and
a deployment mechanism (60) mounted on the longitudinal beam (31) for moving the opening cowl (50) between an open position and a closed position, and comprising a first pivoting arm (61) extending between a first end (611) connected to the longitudinal beam (31) by a first hinge (612) and a second end (613) connected to the opening cowl (50) by a second hinge (614), and
**characterized in that** the deployment mechanism (60) further comprises a retaining rod (62) extending between a first end (621), connected by a first joint (622) to the pivoting arm (61) between the first and second ends (611, 613) of the pivoting arm (61), and a second end (623), connected by a second joint (624) to the opening cowl (50).

2. The assembly according to claim 1, wherein the first joint (622) and/or the second joint (624) of the retaining rod (62) is sliding.

3. The assembly according to any one of claims 1 or 2, wherein the retaining rod (62) is telescopic.

4. The assembly according to any one of claims 1 to 3, further comprising a second pivoting arm (61) parallel to the first pivoting arm (61) and also extending between a first end (611) connected to the longitudinal beam (31) by a first hinge (612) and a second end (613) connected to the opening cowl (50) by a second hinge (614), so as to form a deformable parallelogram with the first pivoting arm (61), the longitudinal beam (31) and the opening cowl (50).

5. The assembly according to any one of claims 1 to 4, further comprising a cowl prop (63) able to be releasably fixed between the longitudinal beam (31) and the opening cowl (50) in the open position.

6. The assembly according to any one of claims 1 to 5, wherein the first hinge (611) is mounted sliding on the longitudinal beam (31).
